# EUROPEAN PATENT APPLICATION

(11) **EP 1 231 462 A2**
(43) Date of publication of application: **14.08.2002**
(21) Application number: 02001647.3
(22) Date of filing: 24.01.2002
(51) Int. Cl.: G01N 23/22

(54) **Method and system for identifying an object by use of decay characteristics of radioactivity of the same object**

(30) Priority: 08.02.2001 JP 2001031862
(71) Applicant: Yoshihisa, Hata, Toyokawa-shi, Aichi-ken (JP)
(72) Inventor: Yoshihisa, Hata, Toyokawa-shi, Aichi-ken (JP)
(74) Representative: Lippert, Marianne

(57) **Abstract**

A method for identifying an object, by specifying an identifier which has been assigned to the object and which has not been indicated on the object itself, is provided to include the steps of: irradiating the object with a radiation; storing in a storage separate from the object, a correlation between the identifier and for-identification information; measuring a level of radioactivity of the object after an irradiation time at which the object was irradiated; obtaining the for-identification information, at least on the basis of the measured level of radioactivity; a measurement time at which the level of radioactivity was measured; and characteristics of a predetermined decay curve representing how the radioactivity of the object decays with time; and retrieving in the storage the identifier corresponding to the obtained for-identification information.

## Description

### BACKGROUND OF THE INVENTION

### Field of the Invention

The present invention relates to a technology of identifying an object, and more particularly to a technology of identifying an object by employing a radiation.

### Discussion of the Related Art

There has been disclosed in Japanese Publication of un-examined Patent Application Hei 10-16458 a conventional technology of identifying an object by employing a radiation. This relates to a method of authenticating a data storage medium that serves as one example of an object.

Described specifically, the above conventional technology has been developed to achieve the goal that an object is capable of being precisely authenticated, thereby preventing unauthorized conducts, such as a forgery, an alternation, a falsification, and so on.

For achieving the goal mentioned above, the conventional method is constructed to comprise the steps of:
(a) affixing a radioisotope to an object;
(b) recording a true identification data on the object;
(c) storing in a memory separate from the object, an affixation time at which the radioisotope was affixed to the object; a measured level of radioactivity of the radioisotope at the affixation time; and the true identification data which has been recorded on the object, such that they are mutually associated with;
(d) measuring a level of radioactivity of the radioisotope which has been affixed to the object, at a time after the affixation time;
(e) calculating back the affixation time, on the basis of the measured level of radioactivity, in view of characteristics represented by a decay curve of radioactivity of the radioisotope;
(f) reading an actual identification data which has been actually recorded on the object; and
(g) authenticating the actual identification data, by correlating the affixation time which has been recorded in the memory in association with the actual identification data; and the back-calculated affixation time.

On the other hand, for example, in a plant where a product is manufactured using a plurality of parts, individual identifiers (e.g., part-IDs, part numbers) are respectively assigned to the plurality of parts, thereby managing these parts and providing instructions for the manufacture.

In such a situation, indication of a human- or machine-readable identifier on the corresponding part would permit identifying the part in a simplified and reliable manner.

Described by way of example, in the case where a certain part is scheduled to be flowed along a plurality of stages, even if the part should unexpectedly separate from a product into which the part is planned to be kept incorporated, at any one of the plurality of stages, reference to an identifier indicated on the part would permit specifying the part.

However, it is not always possible to indicate identifiers on all the parts used in a plant. In some cases, due to limitations on the desired shape, material, or ornamentation of a part, indication of an identifier on the part is impossible or not allowable.

Behind the above, the inventor conducted the research on a technology of identifying an object, by specifying an identifier which has been assigned to the object but which has not been indicated on the object itself.

As a result, the inventor has found the fact that, once a radio activation has been carried out for an object required to be identified, by irradiating the object with a radiation, a level of radioactivity of the object starts to change with time, showing specified characteristics.

The inventor has also found that the above fact would permit a back-calculation of an irradiation time at which an object was irradiated with a radiation, and that an advance correlation between the irradiation time and an identifier of the object would permit identifying the object using the irradiation time.

On the other hand, the aforementioned Japanese Publication discloses that, utilization of the fact that there changes with time, showing specified characteristics, a level of radioactivity of a radioisotope which has been affixed to an object required to be identified, would permit calculating back the affixation time, at which the radioisotope was affixed to the object.

However, the conventional technology described in the above Japanese Publication was developed, as previously stated, to exactly authenticate an object, thereby preventing unauthorized conducts, such as a forgery, an alternation, a falsification, and so on. The conventional technology, therefore, fails to disclose the fact that radioactivity of an object would permit identifying the object.

As may be evident from the above, what the above conventional technology discloses is the fact that authentication of an object is performed by the use of decay characteristics of a radioisotope which has been affixed to the object, and therefore, the conventional technology fails to disclose that, on the premise that an object is a true one, identification of the object itself is performed by the use of decay characteristics of radioactivity of the object itself.

The above conventional technology also fails to disclose that, when it is impossible to indicate on an object such an identifier that has been assigned to the object, utilization of decay characteristics of radioactivity of the object would permit identifying the object itself.

### BRIEF SUMMARY OF THE INVENTION

It is therefore an object or goal of this invention to permit identifying an object itself even when it is impossible to indicate on the object an identifier which has been assigned to the object, by the use of decay characteristics of radioactivity of the object.

The object or goal of this invention may be achieved according to any one of the following modes of this invention. Each of these modes of this invention is numbered, and depends from the other mode or modes, where appropriate. This explanation about this invention is for better understanding of some instances of a plurality of technological features and a plurality of combinations thereof disclosed in this specification, and does not mean that the plurality of technological features and the plurality of combinations in this specification are interpreted not to include any other technological feature than ones described in the following modes of this invention:
(1) A method for identifying an object, by specifying an identifier which has been assigned to the object and which has not been indicated on the object itself, comprising:
   an irradiating step of irradiating the object with a radiation producing radioactivity in the object;
   a storing step of storing in a storage separate from the object, a correlation between the identifier and for-identification information required for identifying the object;
   a for-identification information obtaining step of measuring a level of radioactivity of the object, when the object is required to be identified after an irradiation time at which the object was irradiated with the radiation by the execution of the irradiating step; and of obtaining the for-identification information, at least on the basis of the measured level of radioactivity; a measurement time at which the level of radioactivity was measured; and characteristics of a predetermined decay curve representing how the radioactivity of the object decays as absolute or relative time elapses from the irradiation time; and
   a retrieving step of retrieving in the storage the identifier corresponding to the obtained for-identification information.

   The method according to this mode (1) would permit identifying an object itself by the use of decay characteristics of radioactivity of the object.
   This method would also realize such a state that the object bears its radioactivity to be measured for identification of the object, by irradiating the object with the radiation. Here, the irradiation may be carried out, not depending upon the shape of an object to be irradiated.
   This method, therefore, would permit identifying an object, irrespective of whether such an identifier that has been assigned to the object is incapable of being indicated on the object itself.
   The term "identifier" in this mode and the following modes may be formed as a number (e.g., a numeral) unique to each object, a symbol (e.g., a letter) unique to each object, a composite of them unique to each object, for example.
   The term "time" in this mode and the following modes is used to mean both a date and a time-of-day.
   The term "absolute time" in this mode and the following modes is used to mean a time which is specified at an arbitrary moment on time-base without relying on a reference time, while the term "relative time" in this mode and the following modes is used to mean a time which is specified at an arbitrary moment on time-base in the form of a distance from a reference time. The relative time is capable of being replaced with a length of time, i.e., a period.
(2) The method according to the above mode (1), wherein the for-identification information includes the irradiation time,
   the for-identification information obtaining step includes a back-calculating step of calculating back the irradiation time, on the basis of an irradiation condition under which the object was irradiated with the radiation by the execution of the irradiating step or a measured value of radioactivity of the object immediately after the irradiation time; the measurement time; the measured level of radioactivity of the object at the measurement time; and the characteristics of the predetermined decay curve, and
   the retrieving step includes a step of retrieving in the storage the identifier corresponding to the back-calculated irradiation time.
   The term "irradiation condition" in this mode and the following modes may be interpreted to encompass at least one of an irradiation period during which the irradiation is carried out; the intensity of the radiation (e.g., the radiant flux); the amount of energy of the radiation; and the kind of the radiation.
(3) The method according to the above mode (1), wherein the object includes a plurality of objects,
   the decay curve includes a plurality of decay curves, each of which is predetermined for each of the plurality of objects, and represents how radioactivity of the each object decays with the absolute time,
   the for-identification information includes a plurality sets of information for specifying the plurality of decay curves, respectively,
   the for-identification information obtaining step includes a selecting step of selecting one of the plurality of decay curves which one corresponds to a combination of the measurement time; and the measured level of radioactivity of one of the plurality of objects at the measurement time, and
   the retrieving step includes a step of retrieving in the storage the identifier corresponding to the selected decay curve.
(4) The method according to any one of the above modes (1) to (3), wherein the object includes a plurality of objects, and the irradiating step is executed to sequentially irradiate the plurality of objects with the radiation under such a unitary irradiation condition that only one of the plurality of objects is irradiated with the radiation at the same irradiation time.
   The method according to this mode (4) would make it unnecessary to irradiate a plurality of objects at the same irradiation time, and therefore would make it inessential to vary irradiation conditions (precisely, the level of radioactivity of those objects immediately after irradiation) among those objects.
   Accordingly, this method would facilitate setting a unitary irradiation condition for all the objects, resulting in an easy simplification of a step of irradiating objects with a radiation.
(5) The method according to any one of the above modes (1) to (4), wherein the object is apart which is used as a portion of a predetermined product for manufacturing the product.
   The method according to this mode (5) would permit a simplified and reliable management of a plurality of parts together constituting a product.
(6) The method according to the above mode (5), wherein the part is carried into a plant for manufacture of the product in the plant, and is carried out from the plant together with the product after completion of the manufacture.
   The method according to this mode (6) would make it unnecessary to keep a part emitting the radiation still after the part is carried out from the plant, resulting in permitting an unaffected environment outside the plant by a radiation emitted from the part.
(7) The method according to the above mode (6), wherein the irradiating step is executed to irradiate the part with the radiation under such a predetermined irradiation condition that a level of radioactivity of the part does not substantially exceed a legally allowable one when the part is carried out from the plant.
   The method according to this mode (7) would permit, in a more reliable manner, an unaffected environment outside the plant by a radiation emitted from the part.
(8) A system for identifying an object, by specifying an identifier which has been assigned to the object and which has not been indicated on the object itself, comprising:
   an irradiating device irradiating the object with a radiation producing radioactivity in the object;
   a measuring device measuring a level of radioactivity of the object; and
   a computer associated with a storage, which computer stores in the storage, a correlation between the identifier and for-identification information required for identifying the object, which computer obtains the for-identification information, at least on the basis of the level of radioactivity measured by the measuring device at a measurement time after an irradiation time at which the object was irradiated with the radiation by means of the irradiating device; the measurement time; and characteristics of a predetermined decay curve representing how the radioactivity of the object decays as absolute or relative time elapses from the irradiation time, and which computer retrieves in the storage the identifier corresponding to the obtained for-identification information.

   The system according to this mode (8) would permit performing the method according to the above mode (1) in a suitable manner.
(9) The system according to the above mode (8), wherein the for-identification information includes the irradiation time, and
   the computer includes means for calculating back the irradiation time, on the basis of an irradiation condition under which the object was irradiated with the radiation by means of the irradiating device or a measured value of radioactivity of the object immediately after the irradiation time by means of the measuring device; the measurement time; the measured level of radioactivity of the object at the measurement time; and the characteristics of the predetermined decay curve, and for retrieving in the storage the identifier corresponding to the back-calculated irradiation time.
(10) The system according to the above mode (8), wherein the object includes a plurality of objects,
   the decay curve includes a plurality of decay carves, each of which is predetermined for each of the plurality of objects, and represents how radioactivity of the each object decays with the absolute time,
   the for-identification information includes a plurality sets of information for specifying the plurality of decay curves, respectively, and
   the computer includes means for selecting one of the plurality of decay curves which one corresponds to a combination of the measurement time; and the measured level of radioactivity of one of the plurality of objects at the measurement time, and for retrieving in the storage the identifier corresponding to the selected decay curve.
(11) The system according to any one of the above modes (8) to (10), wherein the object includes a plurality of objects, and the irradiating device sequentially irradiates the plurality of objects with the radiation under such a unitary irradiation condition that only one of the plurality of objects is irradiated with the radiation at the same irradiation time.
   The system according to this mode (11) would permit performing the method according to the above mode (4) in a suitable manner.
(12) The system according to any one of the above modes (8) to (11), wherein the object is a part which is used as a portion of a predetermined product for manufacturing the product.
   The system according to this mode (12) would permit performing the method according to the above mode (5) in a suitable manner.
(13) The system according to the above mode (12), wherein the part is carried into a plant for manufacture of the product in the plant, and is carried out from the plant together with the product after completion of the manufacture, and the system is used only in the plant.
   The system according to this mode (13) would permit performing the method according to the above mode (6) in a suitable manner.
(14) The system according to the above mode (13), wherein the irradiating device irradiates the part with the radiation under such a predetermined irradiation condition that a level of radioactivity of the part does not substantially exceed a legally allowable one when the part is carried out from the plant.
   The system according to this mode (14) would permit performing the method according to the above mode (7) in a suitable manner.
(15) The system according to any one of the above modes (8) to (14), wherein the measuring device is formed as that of a handy type and transmits the measured level of radioactivity to the computer by wireless.

The system according to this mode (15) would permit an improved mobility of the measuring device, resulting in enabling an operator to efficiently measure the level of radioactivity.

### BRIEF DESCRIPTION OF THE SEVERAL VIEWS OF THE DRAWINGS

The foregoing summary, as well as the following detailed description of preferred embodiments of the invention, will be better understood when read in conjunction with the appended drawings. For the purpose of illustrating the invention, there is shown in the drawings embodiments which are presently preferred. It should be understood, however, that the invention is not limited to the precise arrangements and instrumentalities shown. In the drawings:
Fig. 1 schematically illustrates a flow of parts in a plant where a part identifying method according to a first embodiment of the present invention is practiced;
Fig. 2 schematically illustrates a part identifying system for practicing the part identifying method;
Fig. 3 is a block diagram schematically illustrating a computer 20 indicated in Fig. 2;
Fig. 4 illustrates with a table an outline of a parts list stored in a parts-list database 24 indicated in Fig. 2;
Fig. 5 illustrates with a flow chart an irradiating stage of the part identifying method;
Fig. 6 illustrates with a flow chart an identifying stage of the part identifying method;
Fig. 7 is a graph for explaining a part identifying principle adopted for the identifying stage indicated in Fig. 6; and
Fig. 8 illustrates with a flow chart an identifying stage of a part identifying method according to a second embodiment of the present invention.

### DETAILED DESCRIPTION OF THE INVENTION

Several presently preferred embodiments of the invention will be described in detail by reference to the drawings in which like numerals are used to indicate like elements throughout.

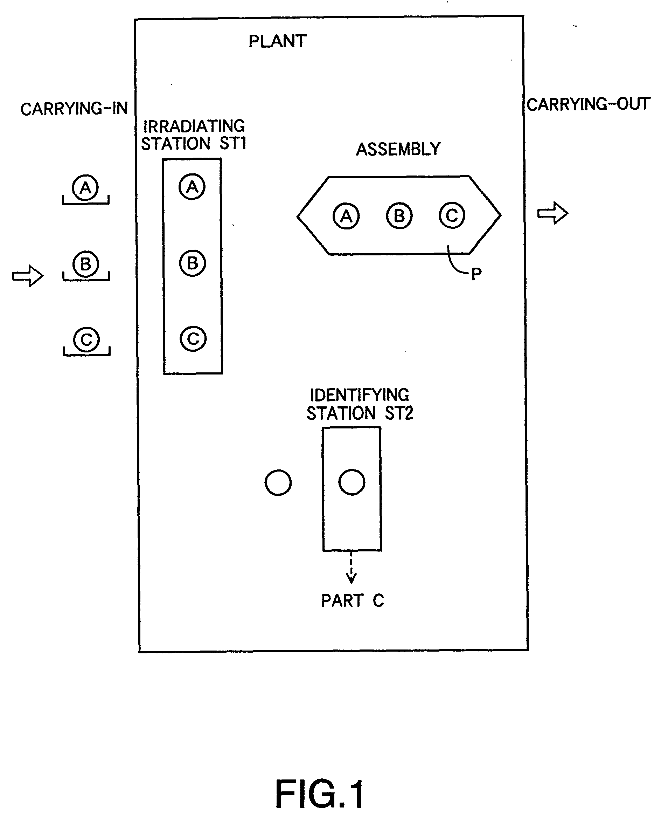

Referring first to Fig. 1, there is schematically illustrated a flow of a plurality of parts in a plant where a part identifying method constructed according to a first embodiment of the present invention is practiced.

In the present embodiment, the part identifying method constitutes one example of an object identifying method to which a first aspect of the present invention is directed, and those parts each constitute one example of an object referred to in the present invention.

In Fig. 1, there is described by way of example how one product is manufactured by using three parts A, B, and C which are different in kind but are identical in appearance.

In this example, these three parts A, B, and C are carried into the plant, such that they are contained in respective pallets (or returnable containers). On each pallet, there is indicated in a machine-readable manner a set of information unique to each part contained in the each pallet.

After being carried in, those three parts A, B, and C are fed through an irradiating station ST1 to an assembly site. At the assembly site where a plurality of steps are performed in a sequential manner, those three parts A, B, and C are each transferred through those steps in a sequential order thereof, while operations required are performed for each part A, B, C, whereby a product P is eventually completed. The completed product P is carried out from the plant.

In the plant, there is also located an identifying station ST2 besides the above-mentioned irradiating station ST1. These two stations ST1 and ST2, which are ones located for practicing the present part identifying method, will be described with respect to their functions.

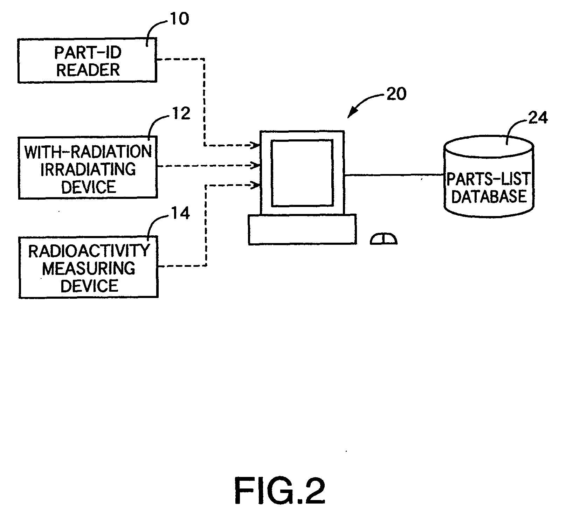

Referring next to Fig. 2, there are schematically illustrated hardware resources of a part identifying system suitably practicing the present part identifying method. The part identifying system constitutes one example of an object identifying system to which a second aspect of the present invention is directed.

As shown in Fig. 2, the part identifying system is constructed to include a part-ID reader 10; an irradiating device 12 for irradiating an object or an article with a radiation; a measuring device 14 for measuring a level of radioactivity; and a computer 20. To the computer 20, there is connected a parts-list database 24.

The part-ID reader 10 and the irradiating device 12 are located at the aforementioned irradiating station ST1, while the measuring device 14 is located at the aforementioned identifying station ST2.

The part-ID reader 10 is a device for reading in the form of an image identification information, such as a bar cord, which has been indicated on each pallet containing each part. The part-ID reader 10 is, in the present embodiment, of a handy-scanner type.

The part-ID reader 10 transmits the above identification information, i.e., the corresponding part-ID, which was read by the part-ID reader 10, to the computer 20 by wire or wireless in real-time.

The irradiating device 12 as previously referred to is a device for irradiating, each time one of the parts is temporally accommodated in the irradiating device 12, the presently accommodated one of the parts, under a predetermined irradiation condition shared by all the parts, with a radiation emitted from a radioactive source.

The irradiating device 12 is configured to irradiate only one part with the radiation at the same irradiation time. The irradiating device 12 is further configured to irradiate each part with the radiation, such that a level of radioactivity of the each part fails to substantially exceed a legally allowed one when the each part is carried out from the plant.

The term "irradiation condition" includes, in the present embodiment, a period during which one cycle of irradiation is continued; the intensity of the radiation (e.g., a radiant flux); the amount of energy of the radiation; and the kind of the radiation.

Further, the irradiating device 12 is also configured to transmit, immediately after termination of each cycle of irradiation, an irradiation-termination signal indicative of termination of each cycle of irradiation, to the computer 20 by wire or wireless in real-time.

The measuring device 14 as previously mentioned is a device for measuring, each time one of the parts is temporally accommodated in the measuring device 14, a level of radioactivity of the presently accommodated one of the parts.

The measuring device 14 is configured to transmit, immediately after termination of each cycle of measurement, a measurement-termination signal indicative of termination of each cycle of measurement, to the computer 20 by wire or wireless in real-time.

The measuring device 14 may be of a handy type permitting the measuring device 14 to transmit the above measurement-termination signal and a signal indicative of the measured level of radioactivity to the computer 20 by wire or wireless in real-time, and permitting the measuring device 14 to be portable.

The measuring device 14 of the above handy type would make it not indispensable to fixedly install the measuring device 14 at the identifying station ST2, and therefore would permit an operator of the measuring device 14, if he or she carries it with him or her, without carrying into the identifying station ST2 a part for identifying the part, contributing to an improved convenience in identifying the part.

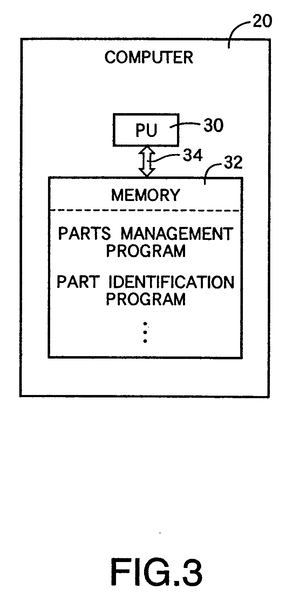

Referring next to Fig. 3, there are schematically illustrated hardware resources of the computer 20. The computer 20 is constructed, in a well-known manner, such that a processing unit 30 (referred to as "PU" in Fig. 3), such as a CPU, and a memory 32 are interconnected via a bus 34.

The memory 32 is constructed to include a recording medium, such as a ROM, a RAM, a magnetic disk, an optical disk, etc. In the memory 32, there has already been stored various programs ranging from a parts management program and a part identification program to other programs.

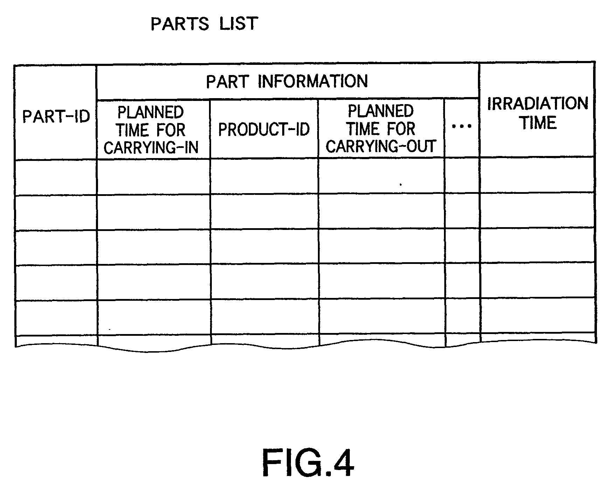

Referring next to Fig. 4, there are illustrated with a table various sets of information to be registered at the parts-list database 24. At the parts-list database 24, there have already been registered part-IDs and the corresponding sets of part information in association with each other.

The part information includes such as a planed time for the corresponding part to be carried into the plant; a planned time for the corresponding part to be carried out from the plant; a product-ID of a product to which the corresponding part is planed to be affixed.

The present part identifying method is constructed to include an irradiating stage and an identifying stage.

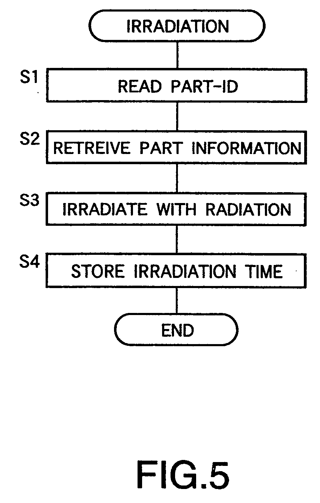

Referring next to Fig. 5, there is illustrated with a flow chart the above irradiating stage. The irradiation stage is implemented each time a part is carried into the plant.

The irradiation stage is initiated with step S1 in which an operator operates the part-ID reader 10 at the irradiating station ST1, thereby reading one of the part-IDs which one has been indicated on one of the pallets. The one pallet has contained one of the parts, named as current part, at the irradiating station ST1. The one part-ID has been assigned to the current part. The one part-ID is transmitted to the computer 20 in real-time.

Step S1 is followed by step S2 for the computer 20 to retrieve in the parts-list database 24 one of the sets of part information which one corresponds to the aforementioned one part-ID. The computer 20 displays the retrieved set of part information on a screen of the computer 20.

Thereafter, in step S3, the current part, which has been carried into the irradiating station ST1, is irradiated with the radiation by the irradiating device 12.

Afterward, the irradiating device 12 transmits the irradiation-termination signal to the computer 20. In response to that, in step S4, as schematically shown in Fig. 4, the computer 20 stores into the parts-list database 24 in association with the part-ID of the current part an irradiation time at which the computer 20 received the irradiation-termination signal.

Then, one cycle of implementation of the irradiating stage is terminated.

In the present embodiment, steps S2 and S4 of the irradiating stage is implemented as a result of the execution of the aforementioned parts management program by the computer 20. The parts management program has another function, such as one for registering parts list (correlating part-IDs and the corresponding sets of part information to each other) at the parts-list database 24 prior to storing the irradiation time of the current part, for example.

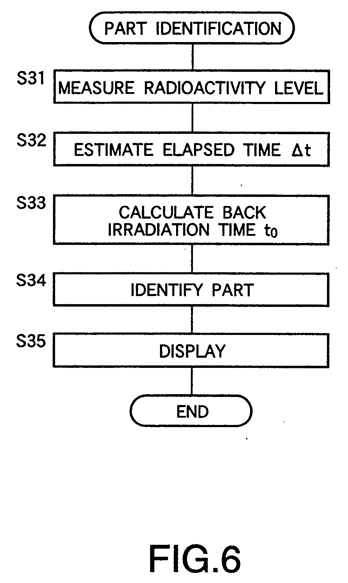

Referring next to Fig. 6, there is illustrated with a flow chart the aforementioned identifying stage. The identifying stage is implemented when it becomes necessary to identify a part.

The identifying stage is initiated with step S31 in which there is measured using the measuring device 14 a level of radioactivity of one of the parts, named as current part, which has been carried into the identifying station ST2.

Upon completion of the measurement, the measuring device 14 transmits the aforementioned measurement-termination signal to the computer 20 in real-time. The computer 20 measures thereby a measurement time at which the measurement was performed, making use of a timer function provided by the computer 20.

Thereafter, steps S32 to S35 are implemented as a result of the execution of the aforementioned part identification program by the computer 20.

In step S32, there is estimated an elapsed period Δt from the irradiation time to to the measurement time tₓ, on the basis of the measurement time tₓ and the radioactivity level aₓ measured by the measuring device 14.

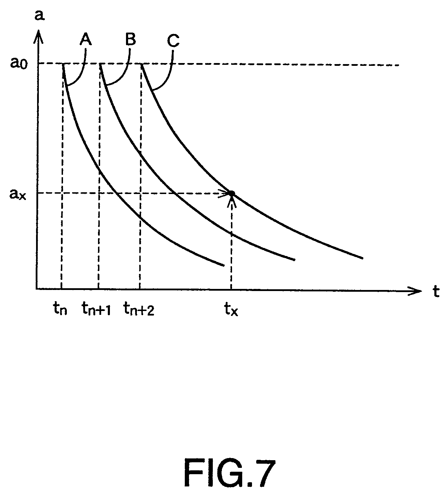

Referring next to Fig. 7, there is illustrated with three respective graphs how levels of radioactivity of three different irradiated parts A, B, and C decay with absolute time. These parts A, B, and C were irradiated at different times tₙ, tₙ₊₁, and tₙ₊₂ under the same irradiation condition.

Each curve represented by each graph in Fig. 7 is referred to as decay curve of radioactivity (or decay curve of a radio-nuclide produced in each part as a result of irradiation with a radiation), characteristics of which curve is unambiguously determined mainly by the kind of a radio-nuclide produced in each part as a result of irradiation with a radiation.

In the present embodiment, it is presupposed that radio-nuclides produced in parts as a result of irradiation are identical in kind with each other.

Hence, in the present embodiment, irrespective of the kind of a part to be identified, there is established a constant relationship between a decay factor representative of a ratio between the aforementioned radioactivity level aₓ and a known radioactivity level a₀ at which the part to be identified bears radioactivity immediately after the irradiation time t₀; and the aforementioned elapsed time Δt.

On the basis of the above findings, in the present embodiment, the relationship between the decay factor and the elapsed time Δt has been previously stored in the aforementioned memory 32, and step S32 is implemented to calculate a current value of the decay factor, and to obtain the elapsed time Δt corresponding to the calculated elapsed time Δt, according to the relationship stored in the memory 32.

Following that, in step S33, the irradiation time t₀ is estimated as a result of subtracting the elapsed time Δt from the measurement time tₓ. That is, the irradiation time t₀ is calculated back.

Subsequently, in step S34, there is retrieved in the parts-list database 24 one of the part-IDs which one has been stored in the parts-list database 24 in association with the estimated irradiation time t₀. The retrieving results in identification of the current part.

Thereafter, in step S35, the retrieved part-ID is displayed as information used in identifying the current part, on the screen of the computer 20.

Then, one cycle of execution of the part identification program is terminated, and one cycle of implementation of the identifying stage is also terminated.

As will be evident from the above explanation, in the present embodiment, the irradiation time constitutes one example of the "for-identification information" set forth in the above mode (1), the parts-list database 24 constitutes one example of the "storage" set forth in the same mode, and the part-ID constitutes one example of the "identifier" set forth in the same mode.

Further, in the present embodiment, step S3 indicated in Fig. 5 constitutes one example of the "irradiating step" set forth in the above mode (1), step S4 indicated in Fig. 5 constitutes one example of the "storing step" set forth in the same mode, steps S31 to S33 indicated in Fig. 6 together constitute one example of the "for-identification information obtaining step" set forth in the same mode, and step S34 indicated in Fig. 6 constitutes one example of the "retrieving step" set forth in the same mode.

Still further, in the present embodiment, steps S32 and S33 indicated in Fig. 6 together constitute one example of the "back-calculating step" set forth in the above mode (2).

Further, in the present embodiment, step S3 indicated in Fig. 5 constitutes one example of the "irradiating step" set forth in the above mode (4) or (7).

Next, there will be described a second embodiment of the present invention.

This embodiment is identical with the first embodiment in many aspects, and is different from the first embodiment only in the principle for identifying a part and in the elements associated with the principle. The same reference numerals or names as used in the first embodiment will be used for reference in the second embodiment to identify the functionally corresponding elements, and only the elements characteristic of the second embodiment will be described in the interest of simplification of the description.

In the first embodiment, a part-ID and an irradiation time are stored in association with each other, and an elapsed time Δt from the irradiation time is estimated on the basis of the level of radioactivity of an object at the irradiation time; the measured level of radioactivity of the object at a measurement time; and characteristics of the decay curve.

Further, in the first embodiment, the irradiation time is estimated by the back-calculation using the estimated elapsed time Δt and the measurement time, and eventually the object in the form of a part is identified.

Alternately, in the present embodiment, there is stored for each part a relationship between the corresponding part-ID and the number of a functional formula representing the corresponding decay curve.

The functional formula of the decay curve, which is provided by the kind of a radio-nuclide produced in each part by irradiating the each part with a radiation; the actual irradiation time at which each part was irradiated with the radiation; and the level of radioactivity of each part immediately after irradiation, represents how the level of radioactivity of each part decays with absolute time since irradiation.

A plurality of functional formulas for a plurality of parts are provided so as to bear the relationship obtained by displacing by a translation operation, in a coordinate system defined such that absolute time "t" is taken on the horizontal axis, while a radioactivity level "a" is taken on the vertical axis, one representative functional formula in the direction of the vertical axis by the amount corresponding to the difference in the irradiation time between the parts.

Based on the above findings, in the present embodiment, those functional formulas are stored in the parts-list database 24. Further, a part-ID and the number of a functional formula are stored in the parts-list database 24 in association with each other.

In the present embodiment, as will be readily understood from the foregoing, the step of storing those functional formulas in the parts-list database 24 in association with the corresponding part-ID constitutes one example of the "storing step" set forth in the above mode (1), and the parts-list database 24 constitutes one example of the "storage" set forth in the same mode.

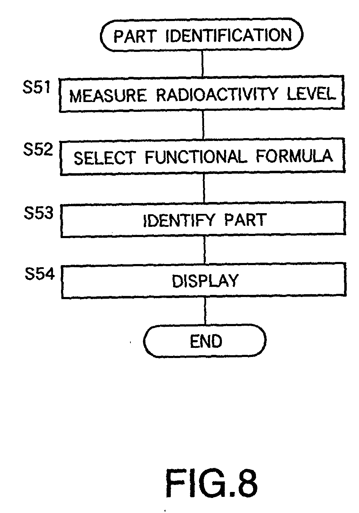

Referring next to Fig. 8, there is schematically illustrated with a flow chart an identifying stage in the present embodiment.

The identifying stage is initiated with step S51 in which, in the same manner as in step 31 indicated in Fig. 6, there is measured by the measuring device 14 a radioactivity level of a current part which has been carried into the identifying station ST2.

Upon completion of the measurement, the measuring device 14 transmits the aforementioned measurement-termination signal to the computer 20 in real-time. The computer 20 thereby obtains the measurement time at which the measurement was conducted, by making use of its timer function.

Subsequently, the computer 20 implements steps S52 to S54 by executing a part identification program in the present embodiment.

In step S52, the plurality of functional formulas are read from the parts-list database 24 in a sequential manner, and then the measurement time tₓ and the radioactivity level aₓ obtained in association with the measuring device 14 are substituted in each one of those functional formulas.

The reading and substitution is repeated until there is found one of those functional formulas which one holds under those substituted two values. If there is found one of those functional formulas which one holds under those substituted two values, the found one is selected as one compatible with the current measurement time tₓ and radioactivity level aₓ.

Thereafter, in step S53, there is retrieved in the parts-list database 24 the part-ID which has been stored in the parts-list database 24 in association with the number of the selected functional formula. The retrieving leads to identification of the current part.

Following that, in step S54, the retrieved part-ID is displayed as information unique to the current part as used for identification thereof, on the screen of the computer 20.

Then, one cycle of execution of the part identification program is terminated, and one cycle of implementation of the identifying stage is also terminated.

As will be readily understood from the foregoing, in the present embodiment, steps S51 and S52 indicated in Fig. 8 together constitute one example of the "for-identification information obtaining step" set forth in the above mode (1), and step S53 indicated in Fig. 8 constitutes one example of the "retrieving step" set forth in the same mode.

Further, in the present embodiment, step S52 indicated in Fig. 8 constitutes one example of the "selecting step" set forth in the above mode (3).
The radiation used in the present invention can be any radiation which produces radioactivity in the object being irradiated. For example, any radiation producing radio-nuclides i.e. radioactive isotopes in an object can be used. The kind of radiation will be selected according to the materials of the object. Those skilled in the art may, for example, choose between different kind of directly and indirectly ionizing radiation like alpha, beta, gamma or X rays or other particle or photon radiation known in the art. As already outlined above, the irradiation conditions are selected and adjusted such that a legally allowed radioactivity for an object is not exceeded.

## Claims

1. A method for identifying an object, by specifying an identifier which has been assigned to the object and which has not been indicated on the object itself, comprising:
an irradiating step of irradiating the object with a radiation producing radioactivity in the object;
a storing step of storing in a storage separate from the object, a correlation between the identifier and for-identification information required for identifying the object;
a for-identification information obtaining step of measuring a level of radioactivity of the object, when the object is required to be identified after an irradiation time at which the object was irradiated with the radiation by the execution of the irradiating step; and of obtaining the for-identification information, at least on the basis of the measured level of radioactivity; a measurement time at which the level of radioactivity was measured; and characteristics of a predetermined decay curve representing how the radioactivity of the object decays as absolute or relative time elapses from the irradiation time; and
a retrieving step of retrieving in the storage the identifier corresponding to the obtained for-identification information.

2. The method according to claim 1, wherein the for-identification information includes the irradiation time,
the for-identification information obtaining step includes a back-calculating step of calculating back the irradiation time, on the basis of an irradiation condition under which the object was irradiated with the radiation by the execution of the irradiating step or a measured value of radioactivity of the object immediately after the irradiation time; the measurement time; the measured level of radioactivity of the object at the measurement time; and the characteristics of the predetermined decay curve, and
the retrieving step includes a step of retrieving in the storage the identifier corresponding to the back-calculated irradiation time.

3. The method according to claim 1, wherein the object includes a plurality of objects,
the decay curve includes a plurality of decay carves, each of which is predetermined for each of the plurality of objects, and represents how radioactivity of the each object decays with the absolute time,
the for-identification information includes a plurality sets of information for specifying the plurality of decay curves, respectively,
the for-identification information obtaining step includes a selecting step of selecting one of the plurality of decay curves which one corresponds to a combination of the measurement time; and the measured level of radioactivity of one of the plurality of objects at the measurement time, and
the retrieving step includes a step of retrieving in the storage the identifier corresponding to the selected decay curve.

4. The method according to any one of claims 1 to 3, wherein the object includes a plurality of objects, and the irradiating step is executed to sequentially irradiate the plurality of objects with the radiation under such a unitary irradiation condition that only one of the plurality of objects is irradiated with the radiation at the same irradiation time.

5. The method according to any one of claims 1 to 4, wherein the object is a part which is used as a portion of a predetermined product for manufacturing the product.

6. The method according to claim 5, wherein the part is carried into a plant for manufacture of the product in the plant, and is carried out from the plant together with the product after completion of the manufacture.

7. The method according to claim 6, wherein the irradiating step is executed to irradiate the part with the radiation under such a predetermined irradiation condition that a level of radioactivity of the part does not substantially exceed a legally allowable one when the part is carried out from the plant.

8. A system for identifying an object, by specifying an identifier which has been assigned to the object and which has not been indicated on the object itself, comprising:
an irradiating device irradiating the object with a radiation producing radioactivity in the object;
a measuring device measuring a level of radioactivity of the object; and
a computer associated with a storage, which computer stores in the storage, a correlation between the identifier and for-identification information required for identifying the object, which computer obtains the for-identification information, at least on the basis of the level of radioactivity measured by the measuring device at a measurement time after an irradiation time at which the object was irradiated with the radiation by means of the irradiating device; the measurement time; and characteristics of a predetermined decay curve representing how the radioactivity of the object decays as absolute or relative time elapses from the irradiation time, and which computer retrieves in the storage the identifier corresponding to the obtained for-identification information.

9. The system according to claim 8, wherein the measuring device is formed as that of a handy type and transmits the measured level of radioactivity to the computer by wireless.
